# EUROPEAN PATENT SPECIFICATION

(11) **EP 3 071 042 B1**
(45) Date of publication and mention of the grant of the patent: **25.04.2018**
(21) Application number: 14820951.3
(22) Date of filing: 02.10.2014
(51) Int. Cl.: A21D 13/00, A21D 15/02, A23P 20/20, A21D 13/36, A21D 13/32, A21D 13/38, A23P 30/40

(54) **INDUSTRIAL FOOD PRODUCT WITH HIGH WATER ACTIVITY AND FILLER AND FREE OF PRESERVATIVE AND EMULSIFIER**
KONSERVIERUNGSMITTEL- UND EMULGATORFREIES INDUSTRIELLES LEBENSMITTELPRODUKT MIT HOHER WASSERAKTIVITÄT UND EINEM FÜLLSTOFF
PRODUIT ALIMENTAIRE INDUSTRIEL À ACTIVITÉ DE L'EAU ÉLEVÉE, COMPORTANT UNE GARNITURE ET SANS CONSERVATEUR ET ÉMULSIFIANT

(30) Priority: 18.11.2013 TR 201313379
(43) Date of publication of application: 28.09.2016
(73) Proprietor: Eti Gida Sanayi Ve Ticaret Anonim Sirketi, Eskisehir (TR)
(72) Inventor: KANATLI, Ahmet Firuzhan, Eskisehir (TR)
(74) Representative: Yamankaradeniz, Kemal
(86) International application number: PCT/TR2014/000369
(87) International publication number: WO 2015/072942

(56) References cited:
- EP-A1- 0 947 141
- WO-A1-99/11147
- RU-C1- 2 254 737
- US-A1- 2010 136 182

## Description

### Technical Field

The invention relates to a filled-laminar industrial food product with prolonged shelf life with the content, technology, packing, storage and distribution conditions used, and the production method of said food product.

The invention particularly relates to an industrial food product, and production method thereof, wherein packing technique comprising preservative gasses is employed, comprising the process of milk-based aerated sugary filling agent with low fat content, high water activity and free of preservative, coloring agent and emulsifier; production of bakery products; and combination of said bakery product with the filler agent.

### Prior Art

In the prior art, food product produced such as pancake, crepe, and waffle can only be prepared as fresh and the filler varieties added within and/or on the same are added by the consumer prior to consumption. Said products cannot be supplied to the consumer as the end product and in an industrial fashion but as semi-products and they should be consumed in a very short time.

Another disadvantage of the products of the prior art is the use of preservative agents in the products containing high water activity fillers for the sake of prolonged shelf life. These preservative agents used, however, fails to provide adequate shelf life. Due to limited shelf life, the fillers used are restricted with products such as marmalade and jam with high sugar and low water activity. It is not possible to supply the consumers with fillers particularly with high milk content, low fat and free of preservative and emulsifier with available methods and reasonable shelf lives.

Another disadvantage, on the other hand, is the short storage period of the products containing milk. Therefore, the shelf life of the milk-based products is extended by addition of various preservatives and additives. The preservation period of the traditional homemade sugary desserts containing milk is also short even under refrigerator conditions.

When said milk-based products are used in conjunction with the bakery products for purposes such as filling and coating, microbial and chemical degradations occur within short time due to high water activity and moisture content. This fact poses a risk for human health and introduces products with deteriorated organoleptic properties.

One of the patents encountered on this subject matter during the studies conducted in the literature is the patent application no. US2011280997 (A1) entitled 'Refrigerator-stable pancake & waffle batter in pressurized can'. Said application is a semi-product which contains flour, sugar, egg and water; can be stored in refrigerator; and put on the market in a pressurized can. A disadvantage of said invention is the necessity of applying cooking process by the consumer during consumption as it is a semi-product.

Another patent encountered is the patent application no. US5384139 (A). Said application is a semi-product containing cereal flour, egg, sugar, milk, and flavoring product. Said semi-product is packed in two separate phases as powder and liquid for the sake of improving shelf life.

Another patent encountered is the patent application no. WO 99/11147 A1 (D4) relates to "Cream-based food composition and process for the manufacture thereof". The aim of the application is to provide a simple and rapid process which makes it possible to produce a cream with a creamy texture and with a fresh state. For the preparation of a cream, a mixture containing a milk derivative, 8-30 % of sugars, 10-60 % of fermented dairy product, 0-25 % of sour cream or of dairy cream containing 25-45 % of fatty substance, 0-35 % of texturizing agent, 0-20 % of aromatic product and 0-0.5 % of salt is prepared with stirring. It is heat treated at 60-115 °C. Then, its temperature is adjusted to 15-40 °C and molten fatty substance is added to it with stirring, so as to obtain a homogeneous cream. The cream thus obtained can be used in the manufacture of a food composition by depositing it on at least one layer, preferably between two layers, of biscuit.

Another patent encountered is the patent application no. EP0947141A1 numbered document relates to "Composite confectionery product". A confectionery product comprises a first and a second layer of a bakery product (4, 6) between which there is a layer of filling cream (8) comprising a thin layer of solid chocolate (10) disposed within the filling cream (8). In paragraphs (007-008), it is given problems about external chocolate coating and two filling cream having different organoleptic characteristics. In order to prevent this problems, the confectionery product which is the subject of the present invention comprises a first and a second layer of a bakery product, between which at least one layer of filling cream is interposed, characterized in that it comprises a thin layer of solid chocolate disposed within the filling cream. The filling cream comprises; water 10-35%, preferably 25-29%; total fats 25-55%, preferably 27-30%; total sugars 25-40%, preferably 30-35%; total proteins 3-8%, preferably 5.5-7.5%.

In conclusion, a development in the relevant technical field concerning convenience food product such as pancake, crepe, and waffle with low fat content, high water activity, and free of preservative, coloring agent, emulsifier is necessitated due to aforementioned disadvantages and due to inadequacy of the existing solutions in this subject matter.

### Brief Description of the Invention

The present invention is an industrial food product with high water activity and filler, and free of preservative, coloring agent and emulsifier; which meets aforementioned requirements, eliminates all disadvantages and brings some additional advantages.

The primary object of the invention is to provide an industrial food product with high water activity (> 0.80), low fat content, filler and free of preservative and emulsifier and minimum 2 months shelf life at +4 to +10°C.
An object of the invention is to have airing capability despite lower fat content compared to the products of the prior art. The product has lower fat content compared to the products of similar type (cake, waffle etc.). The fillers of the products having fillers of similar characteristics contain high rates of agents such as saturated fat (margarine etc.), emulsifier, and gelatin which can aerate. In order to aerate the filler of the invention, a multi-passage unit which is be used as crystallizer, homogenizer, and aerator is used. Air particles are linked into the matrices of the inputs used in the filler by means of the technology used.
A similar object of the invention is that the product contains water and fat but is free of emulsifier.
Another object of the invention is that the product is capable of aerating and preserving its stability (without any phase segregation and without losing air retention characteristics thereof) during the shelf life.
Another object of the invention is that the product is packed using packing materials inflated using oxygen and resilient and completely preservative gasses with low moisture permeability.
Another object of the invention is to perform agitation-condensation-pasteurization-homogenization processes concomitantly using a multifunctional unit, and reducing the microbial load level down to zero. Moreover, concomitant execution of the processes in this unit not only reduces the byproduct conveying losses, but also prevents deterioration of the structure of the byproduct during pumping and transferring and reduces the energy costs.
Another object of the invention is to ensure that the temperature setting-crystallization- aeration-homogenization processes can be performed consecutively with a multi-passage secondary unit and at desired order, and to ensure that the absorption properties, stability of the filler and capability of retaining the air particles within the matrix structure remains stable during the shelf life.
Another object of the invention is to reduce the fat globules contained in the colloidal structure obtained with aeration process to Nano size that cannot combine. By virtue of the surface increase due to such reduction, that is to say Nano size, re-coalescence due to variations in the environmental conditions is prevented, thus improving the product stability.
In order to fulfill the aforementioned objects, the invention is a production method for an industrial convenience food product according to claim 1. The invention also relates to an industrial convenience food product according to claim 9.

### Figures to Facilitate Comprehension of the Invention

Figure-1 is the view of the work flow diagram for the production method of the food product of the invention.
Figure-2 is the schematic view of the equipment used for production of the filler.
Figure-3 is the microscopic view illustrating the colloidal structure of the filler used in the preparation of the food product of the invention.
Figure-3a is the microscopic view illustrating the colloidal structure of the filler produced with available technology.
Figure-4 is the schematic view of an alternate embodiment of the food product of the invention.
Figure-5 is the view of an alternate embodiment for packing the food product of the invention.

The drawings are not necessarily drawn to scale and details not required for comprehending the present invention might have been omitted. Furthermore, elements that are at least substantially identical or have at least substantially identical functions are illustrated with the same numbers.

### Description of the Part References

**1.** Dough layer
**2.** Filler
**3.** Coating
**4.** Seasoning
**5.** Dressing
**6.** Upper packing
**7.** Lower packing

**DT:** De-crystallizer, De-aerator
**K1: First passage**
K2: Second passage
K3: Third passage
K4: Final passage
**T1:** Interim process tank
**T2:** Feed tank
**HPK:** Condenser, Homogenizer, Pasteurizer, Agitator

### Detailed Description of the Invention

In this detailed description, industrial food product with filler of the invention and its preferred embodiments are explained only for better understanding of the subject without any limiting effects.

The invention comprises an industrial food product with high water activity (> 0.80), low fat content, and filler, and free of preservative and emulsifier, and having minimum 2 months shelf life at +4 to +10°C. Said food product comprises bakery products (1) such as pancake and crepe containing filler (2). The food product of the invention is packed using flexible packing materials with low oxygen and moisture permeability. The packages are completely deflated and then filled with preservative gas mixtures (Nitrogen, CO₂, similar gasses and mixtures), thus ensuring that the food product is not affected by the physical impacts until the package is open by means of the pressure which the gas mixture exerts in the package (inflated package).
In general, the production method for the food product of the invention comprises the process steps of;
- preparation of the filler (2),
- preparation and cooking of the dough layer (1) forming the bakery product,
- combination of cooked bakery product (1) with the filler (2),
- packing of obtained food product.

### Preparation of the filler (2)

In the prior art, the main ingredients that enable aeration of the filler products during the process are highly saturated fats or fats in solid form. The filler (2) of the invention, on the other hand, has desired aeration capability despite its lower fat content. The products currently available contain minimum 15% fat. The filler (2) of the invention contains lower fat compared to available fillers with low density. What is meant with the aeration capability is to be able to reduce the density down to 0.2 gr/cm³ levels by employing this method. Although the filler contains water and fat, no emulsifier is used. It has aeration capability and maintains its stability (without any phase segregation, without losing air retention characteristics thereof) during the shelf life. Said filler (2) can be converted into products and semi products (spreadable, depositable, and injectable) with long shelf life processable with high stability in broad viscosity (20.000-75.000 cp), density (0.20-1.2 gr/cm³) and temperature (9-80°C) ranges.

Hereunder, the raw materials forming the filler (2) and the usable % by weight for these raw materials are provided in tabular form.

**Table 1: Content rates of the filler (2)**

| **Content** | **Usable Quantity (%)** |
|---|---|
| Fat (Coconut-palm mixture) | 10-20 |
| Sweetener (sucrose, glucose, dextrose) | 20-50 |
| Water | 15-30 |
| Fat-free dehydrated milk (milk powder) | 10-20 |
| Thickener (Sodium alginate) | 0.1-1 |
| Humectant (Glycerin) | 2-10 |
| Thickener (Starch (potato)) | 1-5 |
| Salt | 0-1 |
| Aroma (Vanillin) | 0-1 |

Said filler (2) (with low fat content, high water activity, high milk content (min 10%), free of preservative and emulsifier) is prepared using multifunctional and multi-passage equipment that enables execution of numerous process steps concurrently, consecutively and at desired order. Said equipment comprises;
- a multifunctional unit (HPK) which enables execution of agitation-condensation-pasteurization-homogenization processes concurrently and reduces microbial load level down to zero;
- a secondary multi-passage unit (K1,K2,K3,K4) which maintains the absorption property and stability of the filler (2) during the shelf life, and enables execution of the temperature setting-crystallization- aeration-homogenization processes consecutively and at desired order; and
- an interim process tank (T1) which sets the temperature of the filler (2) mixture between said two units.

There is no technology available in the prior art that is multi-staged, multi-functional, and capable of making input addition with special flow rate-controlled dosing systems before each stage.

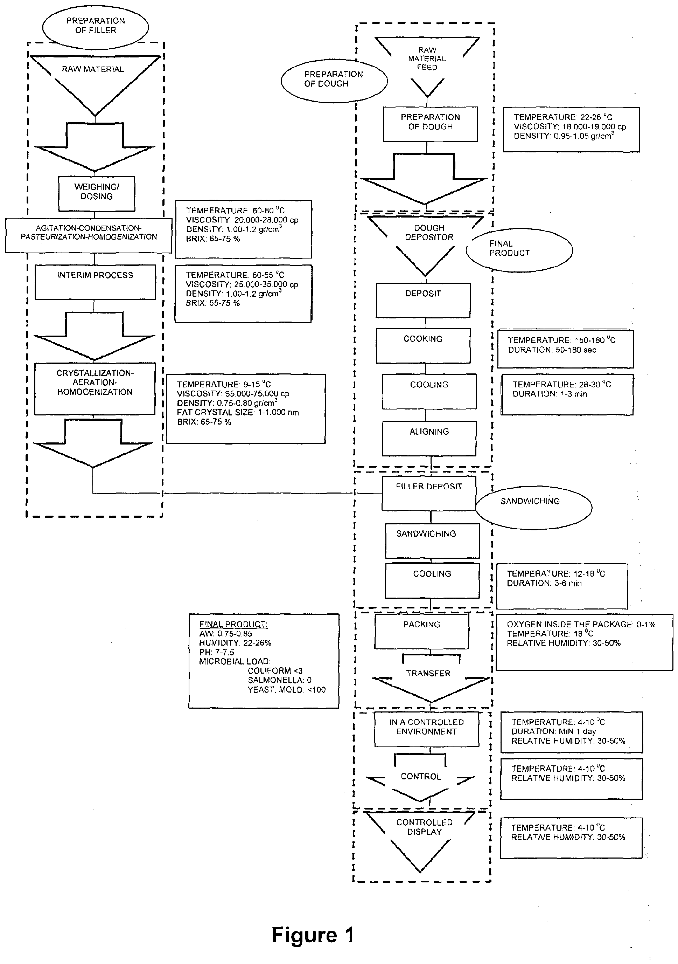

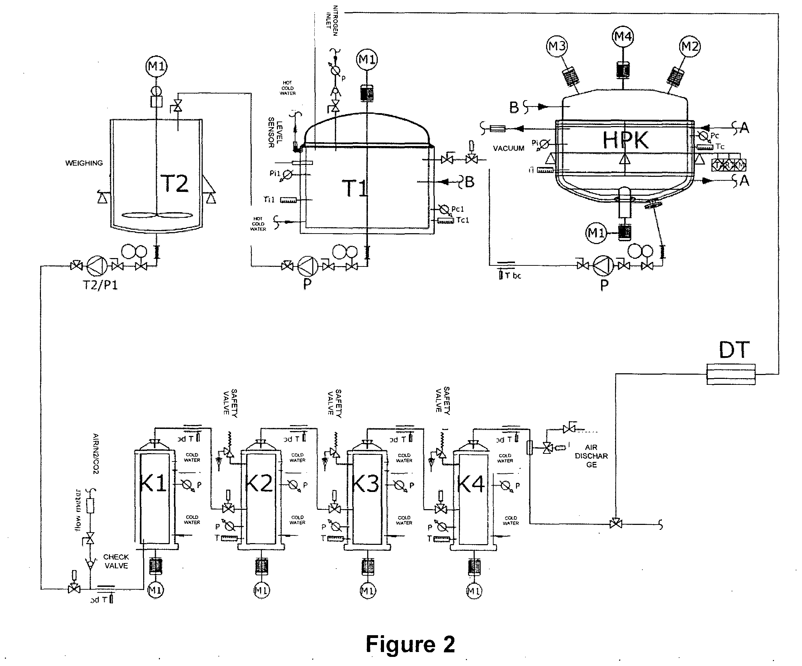

Figure 2 illustrates the schematic view of the equipment used for the production of filler (2).

### • Agitation-Condensation-Pasteurization-Homogenization Process

During preparation of the filler (2), the preliminary processes are performed within the multifunctional unit. The multifunctional unit is a combined unit that enables execution of agitation-condensation-pasteurization-homogenization processes within the same equipment. Use of multifunctional unit reduces byproduct conveying losses. It further eliminates the risks of contamination from pumps and installation elements and change of product characteristics. During any stage of the processes, controlled feed of the substances that do not dissolve within each other under normal conditions is made possible, thus products, where stable mixtures cannot be achieved under normal conditions, can be mixed. Further use of chemicals is not required in order to form said stable mixtures. Moreover, capability to execute 3 processes (condensation-pasteurization-homogenization) within the same unit at the same time reduces the energy costs required for the production process. Use of combined unit precludes secondary processing of the mixture formed by the existing inputs unnecessarily due to some inputs incorporated in intermediate passages. This, in turn, ensures that the nutritional value of the final product sustains minimum damage, that the product is stable and combination of inputs which do not mix easily.

The fluid raw materials (water, glucose, glycerin) forming the filler (2) are added into the multifunctional unit and agitated at 30°C until achieving a homogenous distribution. Then, the powdered raw materials (milk powder, starch, salt, vanillin) forming the filler are added by keeping the temperature constant and effectively dissolved within fluid raw materials through high speed (1000-3000 d/d) agitation without pellet formation. Then, thickener (Sodium alginate) and fat (Coconut-palm mixture) are added. Then, the mixture is agitated with the agitator (high shear mixing) at high speed (1000-3000 d/d) in order to enable the raw materials in the mixture to form a homogenous matrix. The mixture homogenized through high speed agitation is then transformed into the byproduct through condensation and pasteurization at low temperature (60-80°C) under vacuum (-0.8 bar) until desired dry matter value (Brix: 65-75%) is achieved. Viscosity of the obtained byproduct varies in the range of 20.000-28.000 cp while its density varies in the range of 1-1.2 gr/cm³. Achieving desired viscosity and density properties, the filler (2) is then fed to the cooling interim tank (T1) through closed circuit pumps and piping.

By virtue of the multifunctional process unit, the mixture is processed under same medium without relocation. In this manner, fillers (2) with desired properties can be produced through processes (agitation, condensation, pasteurization, and homogenization) applicable in desired order with minimum process steps without any risk of microbial contamination.

### • Interim Process Tank

The interim process tank (T1) comprises a tank with heating-cooling jacket, automatic temperature control, variable-speed agitator, and pump for transfer to the next operation, and level control.

In the interim process tank (T1), the temperature of the byproduct obtained through preliminary processes in the multifunctional unit (HPK) is automatically set to the next process temperature (50-55°C). Therefore, the viscosity of the byproduct achieves a value in the range of 25.000-35.000 cp. Moreover, it is also possible to store the byproduct in the interim process tank. In this tank, automatic agitation process is performed until the temperature of the byproduct mixture is reduced down to the temperature required for next operation. When desired temperature is reached, the byproduct mixture is forwarded to the feed tank (T2) of the next process. This tank has desired temperature and enables in time maintaining the temperature variations at a range not exceeding ±3 ºC. Moreover, it ensures constant feed to the multi-passage crystallization-homogenization-aeration unit, thus ensuring quality sustainability of the final byproduct. The pump feeding the byproduct from the tank (T2) to the crystallization-homogenization-aeration unit is designed with precision flow rate adjustment and automatic control.

### • Crystallization- Aeration-Homogenization Process

The byproduct leaving the interim process tank (T1) is then received by the feed tank (T2) that feeds product to the next operation at desired flow rate and temperature. From the feed tank, the byproduct is transferred to the crystallization-aeration process unit wherein processes such as temperature fixation, crystallization, density adjustment, and obtaining processable conditions can be executed at a single unit. Crystallization-aeration process unit is a multi-passage (K1,K2,K3,K4) unit wherein critical parameters such as temperature and pressure can be adjustable in a broad range. At crystallization and density adjustment stages of this unit, the gasses (N₂, CO₂), aromas and other pumpable inputs are added to the mixture. Examples for such inputs include aromas, natural coloring agents, gelling agents, food particles pumpable in liquid, some special food fats, water, etc.

Use of crystallization-aeration process unit enables addition of different inputs (aromas, natural coloring agents, gelling agents, food particles pumpable in liquid, some special food fats) between or at the end of each passage and providing different properties (low density, high stability, broad viscosity range, distinct tastes, distinct absorption properties etc.) to the product.

The ability of adding pumpable ingredients not intended to be subjected to heat treatment to the passages with different temperature between each passage and thus adjusting the temperature, agitator speed, inner pressure parameters of each passage for the ingredients sensitive to the temperature (aromas, natural coloring agents, gelling agents, food particles pumpable in liquid, some special food fats) enables transfer of the same to the mixture without any damages.

The temperature of the emulsion entering the system is fixed at the first passage (K1) and thus variations that might affect the stability of the end product can be prevented by virtue of the thermal variation property of the multi-passage system.

Prior to final passage (K4), in the second and third passages (K2,K3), critical parameters that are not possible to be furnished at other single passage prior art technologies can be regulated (temperature, pressure, circulation). In this manner, aeration of the emulsion and regulating the fat content in the emulsion to desired crystal structure are ensured. Thus, it is possible for the product to achieve desired colloidal structure. The agitator characteristics of the multi-passage unit at its inner design and control of the parameters such as agitator speed, inner pressure that can be set individually and inner temperature enable reduction of the product temperature to very low values (down to +9ºC) without solidification and the desired structure can be achieved by utilizing the rheological properties of the product at this temperature. Currently, there is no embodiment which is multi-passaged and where the parameters of each passage can be adjusted independently of each other or such embodiments are not used for this purpose.

By means of the characteristics of the multi-passage unit, homogenous distribution of the air cells at small diameters and between fat globules can be achieved by aerating the obtained emulsion, thus obtaining a matrix structure with broad surface area. Homogenous distribution is ensured by utilizing temperature, pressure, agitator speed, agitator type etc. features of the multi-passage unit.

The fat globules contained in the obtained colloidal structure are reduced down to a size (Nano) that doesn't enable them to merge. In this manner, the quantity and surface area of the fat globules at the same unit area increase logarithmically. The surface of the fat globules subjected to the temperature applied to the same unit area becomes resistant to heat more than any surface obtained with known technologies and methods. As the surface area of the fusible inputs reduced to Nano size increases, when same amount of heat is applied, the heat per unit area is reduced compared to the available products (Total heat/ surface relation). This, in turn, ensures that the product is more resistant to heat variations compared to other products and renders the product more stable.

Re-coalescence arising from variations at the environmental conditions is precluded as the ingredients in the filler are reduced to colloidal size (1nm-1 µm), thus improving the product stability.

In the final passage (K4), on the other hand, the temperature of the filler (2) is adjusted without deteriorating the structure of the crystals contained in the colloidal structure obtained in the previous third passage (K3). In this manner, the filler (2), the structure of which is modified up to a non-processable extent in the previous passages, is again rendered processable.

First of all, the temperature (15°C - 30°C) of the byproduct entering the multi-passage unit is fixed in the first passage (K1). In this manner, variations that might affect stability at the properties of the final product are precluded.

The density of the byproduct is reduced (reduction down to 0.2 gr/cm³) by aerating the byproduct in the third passage (K3) prior to the final passage (K4).

Aerated and crystallized byproduct obtained is taken to the final passage (K4) and its temperature is set to 9±1°C in such manner to experience no variation at its structure, thus, is rendered processable.

The byproduct with insufficient crystallization-aeration processes in the multi-passage unit is returned to the De-crystallizer- De-aerator tank (DT) for further processing.

### Preparation and cooking of the dough layer (1) forming the bakery product

The dough layer (1) forming the bakery product is prepared and cooked in an environment that is completely closed to external environment for zeroing microbial risk, where the temperature is maintained under control (12-15°C), the ambient air is cleaned using special filters, having positive pressure, special hygiene barriers and sanitation conditions (air shower, UV, special lighting, floor coating materials, dyes, special equipment etc.).

Hereunder, the raw materials forming the bakery product (1) and the usable % by weight for these raw materials are provided in tabular form.

**Table 2: Content rates of the bakery product (1)**

| **Content** | **Usable Quantity (%)** |
|---|---|
| Fat (nut) | 1-5 |
| Sweetener (sucrose, glucose, | 10-40 |
| honey) | |
| Water | 5-15 |
| Starch (wheat) | 2-5 |
| Salt | 0-1 |
| Aroma (Vanillin) | 0-1 |
| Egg | 15-30 |
| Flour | 15-30 |
| Baking powder | 0-1 |

### Preparation and cooking process of the dough comprises the following process steps;

### • Dough preparation

- Egg, sweetener and fat is effectively agitated for approximately 3 minutes,
- Flour and other thickeners (wheat starch, corn starch, etc.) are added into the obtained mixture and then agitated,
- At the next stage, water and baking powder are added and agitated,
- Obtained dough is deposited on the pre-heated special cooking plates in such manner to ensure smooth diffusion having identical diameter.

### • Cooking

Dough layers (1) of distinct characteristics (low fat, preservative-free, emulsifier-free, high nutritional value) are deposited on pre-heated high temperature (150-180°C) plates made of special alloy and cooked for very short duration (50-180 seconds). At a certain stage of cooking, the dough layer (1) should be inversed in order to achieve homogenous color on both surfaces. It is possible to shape the dough layer (1) smoothly without using template. Moreover, rapid cooking enables high moisture content for the dough layer (1).

Dough layers (1) can be prepared with any desired geometric (square, round etc.) shape.

### • Pre-Cooling

Cooked bakery products (1) are cooled down to a suitable temperature (28-30°C) before addition of filler (2) thereon or therein.

### Depositing, Sandwiching and Seasoning Process Steps

- Cooked bakery product (1) is cooled and sorted in order to make it suitable for depositing filler (2).
- Special filler depositor (a depositor at very narrow grammage tolerances (±1%), and broad viscosity range (4.000-80.000 cp) and that doesn't exert pressure-temperature to the product) enables coalescence of fillers (2) with a broad range of physical properties with the dough layer.
- Food product of the invention can be prepared in the form of a single layer (1) with filler (2), two or more layers (1) with filler (2) therebetween, and layers (1) containing multiple fillers (2) (mingled, abreast, superposed etc.).
- Patterns can be printed on the bakery products (1) combined with the filler (2) through heat treatment or food dyes.
- The bakery products (1) combined with the filler (2) can be diversified through additional operations (chocolate coating (3), dressing (5), seasoning (4) etc.).

The table below provides alternate embodiments concerning in what types and varieties the dough layer (1) can be prepared; how the filler (2) is coalesced with the dough layer (1); and the filler (2) varieties, and types of coating (3), seasoning (4) and dressing (5) applicable on the food product.

**Table 3: Alternate embodiments concerning means of presentation for the food product of the invention**

| **LAYER (1)** | | **FILLER (2)** | | **COATING (3)** | **SEASONING (4)** | **DRESSING (5)** |
|---|---|---|---|---|---|---|
| **SHAPE** | **TYPE** | **PLACE** | **TYPE** | | | |
| Round | Plain dessert | On the layer | Vanilla | Chocolate | Dried nuts and fruits | Patterns can be drawn on the final product in a desired form with chocolate, caramel, milk cream, honey, molasses, marmalade, ketchup |
| Square | Cacao powder dessert | In the middle between the layers | Chocolate | Caramel | Coconut | |
| Rectangular | Caramel dessert | In the side parts between the layers | Fruit | Milk cream | Spices | |
| Square with rounded edges | Fruit dessert | On the layer, different fillers being abreast | Honey | Marshmallow | Cheese pieces | |
| Rectangular with rounded edges | Salty | On the layer, different fillers being superposed | Molasses (boiled fruit juice) | Jelly | | |
| Hourglass | Flavored salty | On the layer, different fillers being mingled | Marmalade | | | |
| | Seasoned salty | Between the layers, different fillers being abreast | Jelly | | | |
| | | Between the layers, different fillers being superposed | Clotted cream | | | |
| | | Between the layers, different filler being mingled | Milk cream | | | |
| | | | Marshmallow | | | |
| | | | Containing pieces/chips (chocolate chips, fruit pieces, dried nuts and fruits etc.) | | | |
| | | | Tomato sauce (paste) | | | |
| | | | Cheese | | | |

### Packaging process steps

- Thermoform packaging equipment (form, fill, seal) is used for packing the food product of the invention.
- The package geometry can be designed specifically for the product. The package can also be designed in a different manner if and when desired. By means of this technology, resilient lower and upper packing materials (6,7) can be shaped in desired geometry and at the time of introducing the product to the package, the air between upper and lower material is completely vacuumed out and replaced with pressurized preservative gas mixtures and sealed.
- The oxygen in the package medium is reduced down to zero by using packing materials with low moisture and gas permeability. In this manner, it is possible to sterilize the product in the package from microbial risks during the shelf life.
- The preservative gas pressure within the package is maintained higher than the atmospheric pressure thus preventing gas ingress from atmosphere into the package, and inflated package enables the food product to avoid mechanic contact and impacts.
- Food product of the invention can not only be put onto market within a vessel comprising the lower and upper packing (6,7), but the product can also be put onto market by placing said vessel into another packing material. Moreover, the food product put only within the lower packing (7) can be packed without using the upper packing (6).

### Storage and Distribution Conditions

- The products leaving the production line at 12-15°C are waited in an environment with relative humidity rate of 30-60% at 4-10°C for a certain period (minimum 1 day) and achieves final product properties (crystallization and moisture balance and temperature).
- The product is distributed using controlled (temperature and relative humidity) and automatically traceable transportation vehicles under said conditions. Storage of the products in distribution points at designated temperature and relative humidity conditions is ensured by means of special devices.
- Depending on the product features and shelf life requirements, it is possible to produce products with similar content that can be consumed at -18°C or at ambient temperature (25°C) conditions by employing this technology.
In conclusion, the invention enables production of an industrial food product with filler with following advantages compared to similar products;
- Free of preservative, coloring agent and emulsifier
- Longer shelf life (minimum 2 months)
- Presentable as final product instead of semi products,
- A single industrial product with minimum 2 months shelf life through coalescence of milk-based filler (2) and said bakery product (1),
- A milky-sugary filler (2) content with low fat rate,
- A filler (2) composition which is unachievable by means of available technologies (stability, shelf life, content),
- Packing technology which is suitable for the product geometry and protects the product (preservative gas and pressurized against mechanical impacts).

## Claims

1. A production method for an industrial convenience ready-to-eat food product, having a minimum water activity of 0,80 and comprising a filler, free of preservative and emulsifier, **characterized in** comprising the process steps of;
a) preparation and cooking of a bakery product (1),
b) in order to prepare the filler (2),
1) obtaining filler (2) by agitation of fat at 10-20% by weight, sweetener at 20-50% by weight, water at 15-30% by weight, fat-free dehydrated milk at 10-20% by weight, thickener at 0.1-1% by weight, humectant at 2-10% by weight, starch at 1-5% by weight, salt at 0-1% by weight, aroma at 0-1% by weight and by execution of condensation-pasteurization-homogenization processes within a single unit,
2) obtaining filler (2) by reducing the temperature of the obtained filler (2) and fixing the same at a 50-55 °C temperature range,
3) processing the filler (2) with fixed temperature in individual passages (K1,K2,K3,K4) by the process steps of,
• fixing the temperature of the by-product between 15-30 °C in the first passage (K1),
• cooling down to a temperature below the freezing point without allowing crystallization with constant agitation in the second passage (K2),
• execution of crystallization- aeration processes by retaining air particles within the viscous matrix structure formed by minimizing the temperature variation and obtaining a colloidal emulsion comprising fat globules having a size between 1nm-1 µm (K3).
• fixing the temperature of the by-product between 8-15°C in the final passage (K4),
c) combining the cooked bakery product (1) with the filler (2),
d) Packing with packages filled with preservative gases.

2. The method according to Claim 1, **characterized in that** said preparation and cooking of the bakery products in item a comprise the following process steps;
• effective agitation of egg, sweetener and fat for 3 minutes,
• addition and agitation of flour and thickeners into the obtained mixture,
• addition and agitation of water and baking powder,
• deposition of obtained dough on the pre-heated special cooking plates in such manner to ensure smooth diffusion having identical diameter.

3. The method according to Claim 1, **characterized in that** said obtaining filler (2) in item b (1) comprises the following process steps;
• agitation of the fluid raw materials consisting of water, glucose and glycerin at 30°C until achieving a homogenous distribution,
• addition of the powdered raw materials consisting of milk powder, starch, salt and vanillin by keeping the temperature constant at 30°C and effectively dissolving within fluid raw materials through 1000-3000 rpm agitation speed without pellet formation,
• addition of Sodium alginate and Coconut-palm mixture ,
• agitation of the mixture with the agitator at 1000-3000 rpm agitation speed in order to enable the raw materials in the obtained mixture to form a homogenous matrix,
• condensation and pasteurization of the mixture homogenized through agitation at a temperature of 60-80°C under vacuum of-0,8 bar until desired dry matter value of 65-75% is achieved.

4. The method according to Claim 1, **characterized in that** the density of said filler (2) in process step specified in item b (3) is reduced down to 0.2 gr/cm³ during crystallization- aeration processes.

5. The method according to Claim 1, **characterized in that** the temperature of said filler (2) in process step specified in item b (3) is set to 9±1°C at the end of the crystallization- aeration processes in the final passage (K4).

6. The method according to Claim 1, **characterized in that** any individual or combinations of aromas, natural coloring agents, gelling agents, food product pumpable in fluid and food particles, food fats is/are added during crystallization-aeration processes added in order to obtain diversified filler (2) varieties.

7. The method according to Claim 1, **characterized in that** the food product in the process step specified in item c can be prepared in the form of a single layer (1) with filler (2), two or more layers (1) with filler (2) therebetween, and layers (1) containing multiple fillers (2).

8. The method according to Claim 1, **characterized in that** fat at 1-5% by weight, sweetener at 10-40% by weight, water at 5-15% by weight, starch at 2-5% by weight, salt at 0-1% by weight, aroma at 0-1% by weight, egg at 15-30% by weight, flour at 15-30% by weight, and baking powder at 0-1% by weight is used during preparation of said bakery product (1).

9. An industrial convenience ready-to-eat food product, having a minimum water activity of 0,80 and comprising a filler comprising fat globules having a size between 1nm-1 µm, said filler being free of preservative and emulsifier; which is obtained with the method mentioned in Claims 1 to 8.

## Patentansprüche

1. Herstellungsverfahren für ein industrielles verzehrbereites Fertiglebensmittelprodukt, das eine minimale Wasseraktivität von 0,80 aufweist und einen Füllstoff umfasst, der konservierungsmittel- und emulgatorfrei ist, **dadurch gekennzeichnet, dass** es die folgenden Verfahrensschritte umfasst;
a) Zubereitung und Garen eines Bäckereiprodukts (1),
b) zur Herstellung des Füllstoffs (2),
1) Erhalten des Füllstoffs (2) durch Rühren von 10-20 Gew.-% an Fett, 20-50 Gew.-% an Süßungsmittel, 15-30 Gew.-% an Wasser, 10-20 Gew.-% an fettfreier Trockenmilch, 0,1-1 Gew.-% an Verdickungsmittel, 2-10 Gew.-% an Feuchthaltemittel, 1-5 Gew.-% an Stärke, 0-1 Gew.-% an Salz, 0-1 Gew.-% an Aroma und durch Ausführen von Kondensierungs-Pasteurisierungs-Homogenisierungs-Verfahren in einer einzigen Einheit,
2) Erhalten des Füllstoffs (2) durch das Verringern der Temperatur des erhaltenen Füllstoffs (2) und Festlegen derselben auf einen Temperaturbereich von 50-55 °C,
3) Verarbeiten des Füllstoffs (2) bei einer festgelegten Temperatur in einzelnen Durchgängen (K1, K2, K3, K4) durch die folgenden Verfahrensschritte:
• Festlegen der Temperatur des ersten Nebenprodukts im ersten Durchgang (K1) auf 15-30 °C,
• Abkühlen auf eine Temperatur unterhalb des Gefrierpunktes, ohne eine Kristallisation zu erlauben, bei konstantem Rühren im zweiten Durchgang (K2),
• Durchführen von Kristallisations-Lufteintrags-Verfahren durch das Zurückhalten von Luftpartikeln in der viskosen Matrixstruktur, die durch Minimieren der Temperaturschwankung gebildet wird, und Erhalten einer kolloidalen Emulsion, die Fettkügelchen umfasst, die eine Größe zwischen 1 nm und 1 µm (K3) aufweisen.
• Festlegen der Temperatur des Nebenprodukts im Enddurchgang (K4) auf 8-15 °C,
c) Kombinieren des gegarten Bäckereiprodukts (1) mit dem Füllstoff (2),
d) Verpacken mit Verpackungen, die mit Konservierungsgasen gefüllt sind.

2. Verfahren nach Anspruch 1, **dadurch gekennzeichnet, dass** Zubereitung und Garen der Bäckereiprodukte in Punkt a die folgenden Verfahrensschritte umfassen;
• wirksames Rühren von Ei, Süßungsmittel und Fett für 3 Minuten,
• Hinzufügen und Rühren von Mehl und Verdickungsmitteln in das erhaltene Gemisch,
• Hinzufügen und Rühren von Wasser und Backpulver,
• Ablegen des erhaltenen Teigs auf den vorgeheizten speziellen Kochplatten derart, dass eine reibungslose Diffusion bei identischem Durchmesser gewährleistet ist.

3. Verfahren nach Anspruch 1, **dadurch gekennzeichnet, dass** das Erhalten des Füllstoffs (2) in Punkt b (1) die folgenden Verfahrensschritte umfasst;
• Rühren der flüssigen Rohstoffe, die aus Wasser, Glukose und Glycerin bestehen, bei 30 °C, bis eine homogene Verteilung erreicht ist,
• Hinzufügen der pulvrigen Rohstoffe, die aus Milchpulver, Stärke, Salz und Vanillin bestehen, durch Konstanthalten der Temperatur auf 30 °C und wirksames Auflösen in flüssigen Rohstoffen durch eine Rührgeschwindigkeit von 1.000-3.000 Upm ohne Pelletbildung,
• Hinzufügen von Natriumalginat und eines Kokosnussöl-Palmöl-Gemischs,
• Rühren der Mischung mit dem Rührwerk bei einer Rührgeschwindigkeit von 1.000-3.000 Upm, damit die Rohstoffe in dem erhaltenen Gemisch eine homogene Matrix bilden können,
• Kondensieren und Pasteurisieren des durch Rühren homogenisierten Gemisches bei einer Temperatur von 60-80 °C unter Vakuum von -0,8 bar, bis der gewünschte Trockenmassewert von 65-75 % erreicht ist.

4. Verfahren nach Anspruch 1, **dadurch gekennzeichnet, dass** die Dichte des Füllstoffs (2) in dem in Punkt b (3) spezifizierten Verfahrensschritt während der Kristallisations-Lufteintrags-Verfahren auf 0,2 g/cm³ verringert ist.

5. Verfahren nach Anspruch 1, **dadurch gekennzeichnet, dass** die Temperatur des Füllstoffs (2) in dem in Punkt b (3) spezifizierten Verfahrensschritt am Ende der Kristallisations-Lufteintrags-Verfahren im Enddurchgang (K4) auf 9±1 °C eingestellt ist.

6. Verfahren nach Anspruch 1, **dadurch gekennzeichnet, dass** ein einzelnes oder Kombinationen von Aromen, natürlichen Farbstoffen, Geliermitteln, Lebensmittelprodukt, das in Flüssigkeits- und Lebensmittelpartikel gepumpt werden kann, Lebensmittelfette während der Kristallisations-Lufteintrags-Verfahren hinzugefügt wird/werden, um diversifizierte Varianten des Füllstoffs (2) zu erhalten.

7. Verfahren nach Anspruch 1, **dadurch gekennzeichnet, dass** das Lebensmittelprodukt in dem in Punkt c spezifizierten Verfahrensschritt in Form einer einzelnen Schicht (1) mit einem Füllstoff (2), von zwei oder mehreren Schichten (1) mit einem Füllstoff (2) dazwischen und Schichten (1), die mehrere Füllstoffe (2) enthalten, zubereitet werden kann.

8. Verfahren nach Anspruch 1, **dadurch gekennzeichnet, dass** 1,5 Gew.-% an Fett, 10-40 Gew.-% an Süßungsmittel, 5-15 Gew.-% an Wasser, 2-5 Gew.-% an Stärke, 0-1 Gew.-% an Salz, 0-1 Gew.-% an Aroma, 15-30 Gew.-% an Ei, 15-30 Gew.-% an Mehl und 0-1 Gew.-% an Backpulver während der Zubereitung des Bäckereiprodukts (1) verwendet werden.

9. Industrielles verzehrbereites Fertiglebensmittelprodukt, das eine minimale Wasseraktivität von 0,80 aufweist und einen Füllstoff umfasst, der Fettkügelchen umfasst, die eine Größe zwischen 1 nm und 1 µm aufweisen, wobei der Füllstoff konservierungsmittel- und emulgatorfrei ist; das mit dem in Ansprüchen 1 bis 8 erwähnten Verfahren erhalten wird.

## Revendications

1. Méthode de production d'un produit alimentaire cuisiné industriel prêt-à-manger, présentant une activité aqueuse minimale de 0,80 et comprenant une garniture, exempte d'agents de conservation et d'émulsifiants, **caractérisée en ce qu'**elle comprend les étapes de procédé suivantes :
a) préparation et cuisson d'un produit de boulangerie (1),
b) pour la préparation de la garniture (2),
1) réalisation d'une garniture (2) par agitation d'une matière grasse de 10 à 20 % en poids, d'édulcorant de 20 à 50 % en poids, d'eau de 15 à 30 % en poids, de lait dégraissé déshydraté de 10 à 20 % en poids, d'épaississant de 0,1 a 1 % en poids, d'humectant de 2 à 10 % en poids, d'amidon de 1 à 5 % en poids, de sel de 0 à 1 % en poids, d'arôme de 0 à 1 % en poids, et par l'exécution de procédés de condensation-pasteurisation-homogénéisation au sein d'une unité unique,
2) réalisation de la garniture (2) par la réduction de la température de la garniture obtenue (2) et sa fixation de celle-ci à une plage de températures de 50 à 55°C,
3) traitement de la garniture (2) avec température fixe dans des passages individuels passages (K1, K2, K3, K4) par les étapes de procédé suivants :
• fixation de la température du sous-produit entre 15 et 30 °C dans le premier passage (K1),
• refroidissement à une température inférieure au point de congélation sans permettre de cristallisation par une agitation constante dans le deuxième passage (K2),
• exécution de procédés de cristallisation-aération par la retenue de particules d'air dans la structure d'une matrice visqueuse formée par la minimisation de la variation de la température, et réalisation d'une émulsion colloïdale comprenant des globules lipidiques mesurant de 1nm à 1 µm (K3).
• fixation de la température du sous-produit entre 8 et 15°C dans le passage final (K4),
c) combinaison du produit de boulangerie cuit (1) avec la garniture (2),
d) Emballage dans des enveloppes remplies de gaz de conservation.

2. Méthode selon la revendication 1, **caractérisée en ce que** la préparation et la cuisson des produits de boulangerie au point a comprennent les étapes de procédé suivantes :
• forte agitation d'oeuf, d'édulcorant et de matière grasse pendant 3 minutes,
• ajout et agitation de farine et d'épaississant dans le mélange réalisé,
• ajout et agitation d'eau et de levure chimique,
• dépôt de la pâte réalisée sur les plaques de cuisson spéciales préchauffées de façon à assurer une diffusion uniforme de diamètre identique.

3. Méthode selon la revendication 1, **caractérisée en ce que** la réalisation de la garniture (2) au point b (1) comprend les étapes de procédé suivantes :
• agitation de matières brutes fluides, composées d'eau, de glucose et de glycérine à 30°C jusqu'à la réalisation d'une distribution homogène,
• ajout des matières brutes en poudre composées de lait en poudre, d'amidon, de sel et de vanilline en maintenant une température constante de 30°C et dissolution efficace dans les matières premières fluides par le biais d'une agitation à 1000 - 3000 tr/mn sans formation de granules,
• ajout d'alginate de sodium et d'un mélange d'huile de coco et d'huile de palme,
• agitation du mélange avec l'agitateur, avec une vitesse d'agitation de 1000 à 3000 tr/mn, afin de permettre aux matières premières dans le mélange obtenu de former une matrice homogène,
• condensation et pasteurisation du mélange par l'agitation à une température homogène comprise entre 60 et 80°C sous un vide de -0,8 bar jusqu'à la réalisation de 65 à 75 % de matière sèche.

4. Méthode selon la revendication 1, **caractérisée en ce que** la densité de ladite garniture (2) à l'étape de procédé spécifiée au point b (3) est réduite à 0,2 gr/cm³ au cours des procédés de cristallisation-aération.

5. Méthode selon la revendication 1, **caractérisée en ce que** la température de ladite garniture (2) à l'étape de procédé spécifiée au point b (3) est réglée sur 9±1°C à la fin des procédés de cristallisation-aération dans le passage final (K4).

6. Méthode selon la revendication 1, **caractérisée en ce que** sont ajoutés, individuellement ou en combinaison, des arômes, agents colorants naturels, agents gélifiants, produits alimentaires à pomper dans des particules de fluide et alimentaires, de graisses alimentaires au cours des procédés de cristallisation-aération de façon à obtenir des variétés de garnitures (2) diversifiées.

7. Méthode selon la revendication 1, **caractérisée en ce que** le produit alimentaire à l'étape de procédé spécifiée au point c peut être préparé sous forme d'une couche unique (1) avec garniture (2), deux couches (1) ou davantage avec garniture (2) intercalée, et des couches (1) contenant de multiples garnitures (2).

8. Méthode selon la revendication 1, **caractérisée en ce que** de 1 à 5 % en poids de matières grasses, de 10 à 40 % en poids d'édulcorant, de 5 à 15 % en poids d'eau, de 2 à 5 % en poids d'amidon, de 0 à 1 % en poids de sel, de 0 à 1% en poids d'arôme, de 15 à 30 % en poids d'oeufs, de 15 à 30 % en poids de farine, et de 0 à 1 % en poids de levure chimique sont utilisés dans le cadre de la préparation dudit produit de boulangerie (1).

9. Produit alimentaire cuisiné industriel prêt-à-manger, présentant une activité aqueuse minimale de 0,80 et comprenant une garniture comprenant des globules de matières grasses d'une granulométrie comprise entre 1 nm-1 µm, ladite garniture étant exempte d'agent de conservation et d'émulsifiant ; obtenu avec la méthode mentionnée dans les revendications 1 à 8.
